# EUROPÄISCHE PATENTSCHRIFT

(11) **EP 1 448 750 B1**
(45) Veröffentlichungstag und Bekanntmachung des Hinweises auf die Patenterteilung: **25.06.2008**
(21) Anmeldenummer: 02802660.7
(22) Anmeldetag: 08.11.2002
(51) Int. Cl.: C10L 1/02, C11C 3/00, C12P 7/62, C07C 67/08, C11B 3/02

(54) **VERFAHREN ZUR HERSTELLUNG VON KRAFTSTOFFEN AUS SAUREN FETTEN UND ANLAGE ZU DESSEN DURCHFÜHRUNG**
METHOD FOR THE PRODUCTION OF FUEL FROM ACID FATS AND SYSTEM FOR CARRYING OUT SAID METHOD
PROCEDE DE FABRICATION DE CARBURANTS A PARTIR DE GRAISSES ACIDES ET DISPOSITIF CORRESPONDANT

(30) Priorität: 09.11.2001 DE 10155241
(43) Veröffentlichungstag der Anmeldung: 25.08.2004
(73) Patentinhaber: Gmk-Gesellschaft Für Motoren und Kraftanlagen Mbh, 18211 Bargeshagen (DE)
(72) Erfinder: PIACENTINI, Aldo, 18209 Wittenbeck (DE); NIESNER, René, 18055 Rostock (DE)
(74) Vertreter: Hagemann, Heinrich
(86) Internationale Anmeldenummer: PCT/EP2002/012536
(87) Internationale Veröffentlichungsnummer: WO 2003/040268

(56) Entgegenhaltungen:
- EP-A- 1 126 011
- WO-A-00/05327
- WO-A-01/12581
- WO-A-01/29160
- GB-A- 634 411
- US-A- 6 028 215
- US-A- 6 069 261

## Beschreibung

Die vorliegende Erfindung betrifft ein Verfahren zur Herstellung von Kraftstoffen aus sauren pflanzlichen oder tierischen Fetten, die einen Gehalt an freien Fettsäuren aufweisen, im Rahmen katalytischer Veresterungsreaktionen sowie eine Anlage zu dessen Durchführung.

Fette und Öle sind regenerative biogene Energiespeicher. In früheren Zeiten wurde beispielsweise Rindertalg nur als Speisefett oder Kerzentalg verwendet. Andere Tierfette, wie Schweine- oder Knochenfett, galten als hochwertige Speisefette für die menschliche Ernährung. Biologische Restfette jeglicher Art galten ebenfalls bis in die jüngste Vergangenheit als hochwertige Rohstoffe für die Futtermittelindustrie. Erst mit der Tierseuchenproblematik, wie BSE und MKS, und dem daraus resultierenden massenhaften Anfall von Abdeckfetten kamen tierische Fette mehr und mehr als Energieträger oder als Dieselsubstitut ins Gespräch.

Fette und Öle sind Triglyceride, d.h. Esterverbindungen von Glycerin mit verschiedenen Fettsäuren, insbesondere höheren Fettsäuren. Allgemein werden solche Fettsäuren als höhere Fettsäuren bezeichnet, die mehr als 12 C-Atome im Molekül enthalten. In den üblichen Triglyceriden bindet 1 Molekül Glycerin 3 Moleküle Fettsäure. Die im jeweiligen Triglycerid enthaltenen Fettsäuren variieren stark und sind artabhängig. In pflanzlichen Ölen/Fetten überwiegt der Anteil ungesättigter und mehrfach ungesättigter Fettsäuren. Hierbei handelt es sich z.B. um Ölsäure und Linolsäure. Gesättigte Fettsäuren, hauptsächlich Palmitinsäure, spielen dagegen eine untergeordnete Rolle. In tierischen Fetten überwiegt der Anteil der einfach ungesättigten Fettsäuren, hauptsächlich Ölsäure, und der gesättigten Fettsäuren, insbesondere Palmitin- und Stearinsäure. Daraus resultiert der hohe Schmelzpunkt der tierischen Fette im Vergleich zu den pflanzlichen Ölen.

Viele Begleitstoffe der Fette sind für die technische Nutzung nicht erwünscht. Das sind zunächst freie Fettsäuren, Di- und Monoglyceride und zum Teil Glycerin, die aus Zersetzungsprozessen der Fette stammen. Weiterhin sind Sterine, Isoprenoide, Phospho- und Glykolipide darin enthalten. Durch Autoxidation der Fettsäuren entstehen flüchtige Bestandteile, wie z.B. Aldehyde, Alkohole und Ketone, und nichtflüchtige Bestandteile. Die flüchtigen Bestandteile sind hauptsächlich für den typischen unangenehmen Alterungsgeruch der Fette/Öle verantwortlich. Die nichtflüchtigen Bestandteile sind geruchlos, beschleunigen aber den weiteren Zersetzungsprozess. Vorwiegend in tierischen Fetten sind auch Schwermetalle in geringsten Konzentrationen enthalten, welche die Tiere über die Nahrungskette aufnehmen. Diese wirken katalytisch und fördern ebenfalls die weitere Zersetzung.

Werden Fette bzw. Öle verbrannt und als Energieträger oder als Kraftstoffsubstitut genutzt, dann können die angesprochenen Begleitstoffe zwar alle, mit Ausnahme der Schwermetalle, mitverbrannt werden, gestalten aber den Umgang mit dem Fett schwierig. Sie verkürzen die Lagerzeiten, wirken sich nachteilig auf die Abgaszusammensetzung aus und wirken auf die Motorbaugruppen korrosiv. Daher war es bei der Verwertung insbesondere tierischer Fette bisher unumgänglich, aufwendige Reinigungsmaßnahmen durchzuführen. Die direkte Nutzung von Fett als Kraftstoff für die dieselmotorische Verwendung wurde bereits in der DE 31 17 374 A1 angesprochen. Da tierische Fette einen relativ hohen Schmelzpunkt besitzen, ist ein Kraftstofferwärmen zwingend notwendig. Eine Nutzung ist möglich und relativ einfach zu realisieren. Langzeitversuche an Dieselmotoren offenbarten jedoch ein bedeutendes Problem der Tierfettnutzung. Durch den hohen Fettsäuregehalt ist die Grenznutzungsdauer wesentlicher motorischer Baugruppen stark begrenzt. Besonders mechanisch stark beanspruchte Bauteile, wie z.B. das gesamte Einspritzsystem moderner Dieselmotoren, sind nach wenigen Betriebsstunden verschlissen. Daher ist um so erstaunlicher, dass die DE 196 22 601 C1 die Korrosion auf einen übermäßig hohen Anteil an Glycerin zurückführen will, dagegen Altfett mit einer Azidität von 75% einem dieselmotorischen Prozess völlig problemlos zugemutet werden soll. Der in dieser Patentschrift angesprochene "bekannte Schädigungsmechanismus" wurde darin nicht weiter erläutert und steht in krassem Gegensatz zu dem durch die Anmelderin im Zusammenhang mit der nachfolgend geschilderten Erfindung durchgeführten Untersuchungen und von ihr initiierten Untersuchungen bei fachlich spezialisierten Forschungseinrichtungen und namenhaften Motorenherstellern. Eine derartige Verwendung als Kraftstoff wird bezweifelt und kann nur zu einem wirtschaftlichen Schaden für den Nutzer führen.

Es existiert eine Reihe von Verfahren, Fette für motorische Prozesse aufzubereiten. Die Schleimstoffe und Schwermetalle können durch einfaches Waschen mit wässrigen sauren Lösungen entfernt werden. Als mögliche Säuren sind Phosphorsäure und Zitronensäure besonders geeignet und werden bereits häufig eingesetzt. Durch einen solchen Waschprozess werden die korrosiven Bestandteile, die Fettsäuren, nicht entfernt. Es besteht die Möglichkeit, Fettsäuren durch Waschen mit verdünnter Natronlauge zu entfernen. Dieses Verfahren eignet sich nur für schwach saure Fette. Die handelsüblichen Fette können 25 Gew.-% und mehr freie Fettsäuren enthalten. Das entspricht einer Neutralisationszahl (KOH-Zahl) von 50. Angestrebt wird jedoch eine KOH-Zahl von möglichst 0,5 oder weniger. Zur Neutralisation von 1000 kg Fett mit einer 1 M NaOH sind dazu 900 Liter Natronlauge notwendig. Ein solches Verfahren ist daher ersichtlich für die Behandlung saurer Fette unwirtschaftlich.

Weitere beschriebene Möglichkeiten, die Azidität zu senken, sind die Abtrennung der Fettsäuren durch Wasserdampfdestillation (Lurgi) und durch selektiv wirkende Extraktionsmittel, wie z.B. mit einem Isopropanol/Hexan-Gemisch. Basische Extraktionsmittel, die Aminogruppen enthalten, werden z.B. in der DE 199 18 097 A1 angesprochen. Die Extraktion mit Polyethylenglykolen wird in der DE 196 38 459 A1 beschrieben. Eine chemische Umsetzung der Fettsäuren direkt im Tierfett ist die Ausnahme. So befasst sich die DE 199 56 599 A1 mit der Veresterung von freien Fettsäuren in Fetten mit einwertigen, kurzkettigen Alkoholen in Gegenwart von Lipasen.

Die Herstellung von Biodiesel unter Verwendung von pflanzlichen Ölen, insbesondere Rapsöl oder Sonnenblumenöl, wird in der Fachwelt zunehmend favorisiert. Mehrere Anlagen sind in jüngster Zeit in Betrieb genommen worden bzw. werden gebaut. In diesen Anlagen wird das Öl komplett basisch in die Fettbestandteile Glycerin und Fettsäuren gespalten. Anschließend werden die entstandenen Fettsäuren mit Methanol verestert. Es entsteht somit ein Fettsäuremethylester und als Nebenprodukt Glycerin. Die Umesterung von Tierfetten in solchen Anlagen ist grundsätzlich möglich und arbeitet nach dem gleichen Prinzip. Weitere Entwicklungen beschäftigen sich nach der DE 697 01 014 D2 mit der Verwendung von Ethanol als Veresterungsreagens.

Es erweist sich somit, dass die bisherigen Verfahren sämtlich nicht zufriedenstellen, insbesondere kompliziert, aufwendig und unwirtschaftlich sind, insbesondere weil entweder eine aufwendige Umesterung betrieben wird, um beispielsweise Fettsäuremethylester zu erhalten, oder die korrosiven Bestandteile in Form der freien sauren Fettsäuren höchst aufwendig entfernt werden. Es ist daher Aufgabe der Erfindung, das eingangs bezeichnete Verfahren so weiterzubilden, dass hier die wünschenswerten Vorteile erzielt werden.

Erfindungsgemäß wird diese Aufgabe dadurch gelöst, dass die in dem sauren Fett enthaltenen freien Fettsäuren bei erhöhter Temperatur und unter Vakuum mit einem oder mehreren mehrwertigen Alkoholen in Gegenwart fester neutraler Katalysatoren, die in einem Festbett innerhalb des Reaktionssystems vorliegen, verestert werden, wobei die sauren Fette im Reaktionssystem von oben nach unten und hierzu im Gegenstrom der Alkohol geführt wird und unter der Einwirkung des Vakuums ein Alkohol und Wasser enthaltendes Gemisch im oberen Teil des Reaktionssystems abgezogen wird.

Im Rahmen der Erfindung werden demzufolge saure pflanzliche oder tierische Fette zur Herstellung von Kraftstoffen herangezogen. Besonders lohnend ist der Einsatz des erfindunsgemäßen Verfahrens bei sauren Fetten, deren Neutralisationszahl (KOH-Zahl) mindestens etwa 10, insbesondere mindestens etwa 30 beträgt. Vorzugsweise liegt die Neutralisationszahl des eingesetzten sauren Fettes über etwa 150 , insbesondere über etwa 80. Problemlos lassen sich saure Fette erfindungsgemäß behandeln, deren Neutralisationszahl bei etwa 60 oder mehr liegt, was einen Gehalt an freien Fettsäuren von etwa 30 % oder mehr entspricht, wie er beispielsweise in herkömmlichen Abdeckfetten vorzufinden ist. Zur Kennzeichnung eines erfindungsgemäß besonders geeigneten Ausgangsmaterials kann auch der Gehalt an freien Fettsäuren herangezogen werden, der bezogen auf Ölsäure der Acidität in % entspricht. Die Acidität liegt vorzugsweise zwischen etwa 5 bis etwa 75%, insbesondere zwischen etwa 15 bis 40%.

Für die erfindungsgemäß geeigneten sauren pflanzlichen oder tierischen Fetten zählen insbesondere Tierfette, Altfette, Abdeckfette, industrielle Restfette, Fette aus Ölabscheidern, aus Kläranlagen, sowie stark sauren Pflanzenfette bzw. Öle. Mit besonderem Vorteil werden Landtierfette, insbesondere Schweinefett, Rindertalg, Hammeltalg, Pferdefett sowie auch Gänse- und Hühnerfett, behandelt. Sehr vorteilhaft ist auch der Einsatz von sauren Fischölen. Die Fischöle sind durch ihren hohen Gehalt an mehrfach ungesättigten Fettsäuren charakterisiert. Normalerweise können die sauren Fette, so wie sie angeliefert werden, dem erfindungsgemäßen Verfahren unmittelbar zugeführt werden. In Einzelfällen ist es zweckmäßig, einen zu hohen Wasseranteil zu reduzieren, das durch einen vorgeschalteten Dekanter erreicht werden kann. Bei geringerem Wasseranteil erfolgt während der Aufheizphase des Fettes die Abscheidung von Wasser in der Apparatur automatisch.

Das erfindungsgemäße Verfahren hebt sich von den in der Praxis im Vordergrund stehenden Verfahren, die eine Hydrolyse mit anschließender Veresterung der Fettsäure zum Methylester vorschlagen, dadurch ab, dass eine Nachveresterung der freien Fettsäuren durch Einsatz eines zwei- und/oder mehrwertigen Alkohols erfolgt. Ist in den normalen gesättigten Kohlenwasserstoffen je 1 H-Atom an mehreren C-Atomen durch Hydroxylgruppen ersetzt, dann kommt man zu mehrwertigem Alkohol. Die einfachsten Vertreter dieser Stoffklasse sind der zweiwertige Alkohol Ethylenglykol, der dreiwertige Alkohol Glycerin und der vierwertige Alkohol Pentaerythrit. Grundsätzlich können solche Alkohole in Frage kommen, bei denen die Anzahl der C-Atome lediglich die Anzahl der (mindestens 2) OH-Gruppen im Molekül überschreitet, beispielsweise kann es sich auch handeln um Propandiol, Butandiol oder Butantriol. Als fünfwertige Alkohole kommen beispielsweise Pentite in Frage. Bevorzugt werden im Rahmen des erfindungsgemäßen Verfahrens Ethylenglykol und Glycerin, wobei diese im Einzelfall gemischt eingesetzt werden können. Glycerin hat den besonderen Vorteil, dass es einerseits dazu führt, dass die Fettsäuren in ein Triglyerid überführt werden, das der Hauptmasse chemisch gleichkommt, und, andererseits eine größere Menge an Fettsäuren binden kann und in der Massenbilanz günstiger liegt. Die Nachveresterung wird zweckmäßigerweise mit einem stöchiometrischen Überschuss an Alkohol gegenüber den in den eingesetzten sauren Fetten bzw. Ölen enthaltenen Fettsäuren durchgeführt ist. Dabei ist es besonders vorteilhaft, wenn auf 1 Gew.-Teil freie Fettsäuren etwa 1/10 bis 1/8 Gew.-Teile Ethylenglykol bzw. Glycerin entfallen.

Da das Ausgangsmaterial des erfindungsgemäßen Verfahrens, insbesondere in Form saurer tierischer Fett, fest ist, ist es notwendig, dieses durch Vorwärmen in einen pumpfähigen Zustand zu überführen. Die bereits ursprünglich flüssigen sauren Fette bzw. die durch Vorwärmen pumpfähig gemachten Fette können, wenn erforderlich, einer Vorreinigung unterzogen werden. Zur Vorreinigung kann ein Grobfilter zum Abtrennen von Schwebeteilchen bzw. Sandkörnern oder anderen körnigen Verunreinigungen herangezogen werden. Eine weitere Reinigung ist für die Reaktion im allgemeinen nicht erforderlich.

Das gegebenenfalls vorgewärmte und gegebenenfalls vorgereinigte Ausgangsmaterial wird dann in einen geeigneten Veresterungs- bzw. Reaktionsreaktor überführt. Hierbei kann es sich insbesondere um eine Turmapparatur handeln. Wird demzufolge nachfolgend auf eine "Turmapparatur" Bezug genommen, so gelten die dort gemachten Ausführungen entsprechend für vergleichbare Veresterungsreaktoren.

Die Veresterungsreaktion wird in der Turmapparatur vorzugsweise bei einer Temperatur von etwa 150 bis 220°C, insbesondere von etwa 190 bis 200°C vorgenommen, was insbesondere für den Einsatz von Tierfetten gilt. Die Turmapparatur wird geeigneterweise auf die Verfahrenstemperatur aufgeheizt. Dies kann elektrisch erfolgen. Zweckmäßigerweise nutzt man hier auch die Abwärme einer Kraftanlage, zu deren Betrieb das neutralisierte Verfahrenserzeugnis herangezogen werden kann. Auch kann die hiervon abgezogene Wärme zum Vorwärmen des Ausgangsmaterials genutzt werden. Während der Aufheizphase wird das Material zweckmäßigerweise bereits über eine Pumpe im Kreislauf geführt, d.h. am Fuß der Turmapparatur wird das Fett abgesaugt und am Kopf wieder eingedüst.

Weiterhin wird die Turmapparatur während der Aufheizphase durch Einsatz einer Vakuumpumpe unter Vakuum gesetzt. Dabei wird das Vakuum vorzugsweise auf etwa 7 bis 250 mbar, insbesondere etwa 15 bis 50 mbar, eingestellt. Durch die Einstellung des Vakuums wird das Fett in der Turmapparatur vorgetrocknet. Auch wird die Anlaufzeit der Veresterung abgekürzt. Anschließend wird die zur Veresterung notwendige Menge des mehrwertigen Alkohols über eine Dosiereinrichtung am Fuß der Turmapparatur der Reaktion zugeführt. Da der Alkohol leichter ist, steigt er langsam nach oben, während das Fett nach unten sinkt, so dass die Veresterung der freien Fettsäuren des eingesetzten Materials im Gegenstrom stattfindet. Ein großer stöchiometrischer Überschuss an mehrwertigem Alkohol ist in der Regel nicht erforderlich, da im Rohmaterial noch freie Alkoholgruppen vorhanden sind, mit denen die freien Fettsäuren ebenfalls verestern können.

In der Turmapparatur ist der neutrale feste Katalysator vorzugsweise in mehreren Festbettschichten untergebracht. Grundsätzlich wird der Katalysator bzw. das jeweilige Festbett in einer solchen Weise ausgebildet, dass es eine größtmögliche Reaktionsfläche aufweist. Es ist von Vorteil, wenn der Katalysator eine optimale Durchströmung zulässt, insbesondere die Ausbildung von Turbulenzen, um einen besonders günstigen katalytischen Effekt zu erzielen. Als feste neutrale Katalysatoren kommt eine Anzahl von hierfür üblichen Metallen in Frage, insbesondere Aluminium, Antimon, Barium, Blei, Cadmium, Eisen, Kupfer, Mangan, Titan, Zinn, Zink, deren Oxide, Salze und/oder Legierungen. Es ist im allgemeinen davon auszugehen, dass eine Aufspaltung der Fettmoleküle in Glycerin und Fettsäuren unter den erfindungsgemäß eingestellten Reaktionsbedingungen nicht zu erwarten ist. Andernfalls werden die Reaktionsbedingungen unter Beachtung der erfindungsgemäßen Rahmenbedingungen fachmännisch entsprechend geändert.

Zwar werden in der Fachliteratur eine Reihe von neutralen metallischen Katalysatoren beschrieben, die sich für die Veresterung von Fettsäuren mit Alkoholen eignen. Einer der genannten Katalysatoren ist Zinkstaub, der mit etwa 0,2 Gew.-%, bezogen auf die Gesamtmasse der Reaktionspartner, an der Reaktion teilnimmt. Dieses Masse-Oberflächen-Verhältnis entspricht einer reaktiven Oberfläche von etwa 56 m² pro Tonne Tierfett. Allerdings kann entgegen den Angaben des Standes der Technik Zinkstaub hier keine Anwendung finden, da dieser abrassiv wirkt und eine Zerstörung der Pumpen sowie ein Verstopfen der Filteranlagen zur Folge hätte. Weiterhin würde die Qualität des Reaktionsgutes durch Zinkpartikel verschlechtert werden. Es bieten sich aber eine Reihe weiterer Möglichkeiten an, Zink in anderen technischen bzw. physikalischen Formen zu verwenden. Jedoch muß darauf geachtet werden, daß auf die Gesamtmasse Tierfett und auf die darin enthaltenen freien Fettsäuren bezogen, eine ausreichend große Zinkfläche zur Verfügung steht. Es ist daher konstruktiv darauf zu achten, daß das Masse-Oberflächen-Verhältnis des Zinkkatalysators möglichst klein gehalten wird. Neben Ringen, Röhren oder Sattelkörpern erwies sich Zinkdraht, welcher in Spiralenform gewickelt wurde, als besonders einfache und geeignete Lösung, die alle notwendigen Anforderungen erfüllt. Da Zink ein relativ weiches Material ist, kann eine Turmapparatur nicht mit Zinkspiralen voll gefüllt werden, da die Eigenmasse des Zinkkatalysators die unteren Spiralschichten, z.B. bei einer Reaktionstemperatur von 200°C, verformen würde. Durch die Verformung der Spiralen wäre eine gezielte Durchströmung des Reaktionsgefäßes nicht mehr möglich. Aus diesem Grunde ist es besonders vorteilhaft, den Katalysator druckentlastet über Zwischenböden in das Reaktionsgefäß einzubetten, demzufolge insbesondere in mehreren, mindestens zwei Festbettschichten.

Ein wesentlicher Vorteil von Spiralen ist die Gewährleistung einer hervorragenden horizontalen Durchmischung des Reaktionsgutes bei geringen Strömungswiderständen. Die intensive Durchmischung der Reaklionsteilnehmer erfolgt sowohl bei geringen als auch bei hohen Fließgeschwindigkeiten, so daß auf mechanische Hilfe beispielsweise eines Rührwerks mit allen seinen mechanischen Aufwendungen bei der Durchmischung verzichtet werden kann und somit eine kontinuierliche Reaktionsführung möglich wird. Grundsätzlich ist es dem Fachmann also an die Hand gegeben, unabhängig von der Art des Katalysators und seiner physikalischen Gestaltung, das erfindungsgemäße Verfahren chargenweise oder auch kontinuierlich zu betreiben.

Die oben im Zusammenhang mit dem Einsatz eines Zinkkatalysators gemachten Ausführungen gelten, was dem Fachmann ohne weiteres ersichtlich ist, für alle anderen Katalysatoren ähnlicher Grundeigenschaften, wie katalytische Wirksamkeit oder auch die angesprochene Weichheit. In jedem Fall ist es ihm möglich, unter Beachtung der Darstellung der Erfindung nicht nur die besondere Ausbildung des Feststoffbettes bzw. der Feststoffbetten vorzunehmen, sondern auch die weiteren geeigneten Parameter so einzustellen, dass das Verfahren die gestellte Aufgabe löst.

Das durch die Veresterung entstehende Reaktionswasser ist unter den angegebenen Reaktionsbedingungen gasförmig und wird vorzugsweise durch eine Vakuumpumpe aus der Reaktionsmischung entfernt und durch einen Produktkühler in einer Vorlage aufgefangen. Das Abziehen des Reaktionswassers führt dazu, dass das sich sonst einstellende dynamische Gleichgewicht keine Weiterveresterung zulässt. Demzufolge ist die Entfernung des Wassers für eine vorteilhafte Durchführung des erfindungsgemäßen Verfahrens notwendig, da die Veresterungsreaktion sonst nicht vollständig ablaufen würde. Der eingesetzte Alkohol, der ebenfalls unter den genannten Bedingungen siedet, wird in einen vorgeschalteten Rückflusskühler über eine Kühlfalle und Dosiereinrichtung der Reaktion wieder zugeführt. Somit wird der Verlust an Alkohol weitgehend ausgeschlossen. Demzufolge wird ein aus Alkohol und Wasser enthaltendes Gemisch aus dem Veresterungssystem abgezogen und einer differenzierten Kondensation unterworfen, wobei der gesondert kondensierte Alkohol dem Veresterungssystem wieder zugeführt wird. Die Kühlung des Rückflusskühlers zur Kondensation des eingesetzten Alkohols erfolgt bei einer praktischen Ausführungsform der Erfindung durch Wasser einer Temperatur von etwa 75 bis 85°C, insbesondere etwa 80°C. Bei einem Druck von etwa 20 mbar und einer Temperatur von etwa 80°C ist Wasser noch gasförmig, so dass nur der Alkohol in dem Rückflusskühler kondensiert, das Wasser jedoch erst im Produktkühler, der durch Wasser einer Temperatur von etwa 20°C gekühlt werden kann.

Im allgemeinen ist die erfindungsgemäß durchzuführende Veresterungsreaktion nach etwa 6 Stunden abgeschlossen. Darauf wird das neutralisierte bzw. nachveresterte Fett am Fuß der Turmapparatur abgepumpt und zweckmäßigerweise einem Waschturm zugeführt, um Katalysatorreste und andere unerwünschte Verunreinigungen zu entfernen. Als Waschflüssigkeit können insbesondere wässrige organische Säuren, vorzugsweise eine etwa 0,05 bis 0,5%ige, insbesondere etwa 0,1 %ige, Zitronensäurelösung, herangezogen werden. Im allgemeinen ist ein Entfärben des Produktes nicht erforderlich, da die dunkelbraune Verfärbung bei dem Verbrennen in einer Kraftanlage, insbesondere einem Heizkraftwerk oder einem Großdieselmotor keinen negativen Einfluss ausübt.

Das anfallende Verfahrenserzeugnis kann, vorzugsweise ohne übermäßige Abkühlung, bei den angesprochenen Waschmaßnahmen im warmen Zustand unmittelbar zum Betrieb der angesprochenen Kraftanlagen herangezogen werden. Im Falle einer Verfestigung ist es vorteilhaft, das Material vorzuwärmen und dann der Kraftanlage zuzuführen.

Im wesentlichen wurden die konstruktiven Merkmale einer Anlage, die besonders zur Durchführung des erfindungsgemäßen Verfahrens geeignet ist, bereits behandelt. Somit ist eine derartige Anlage insbesondere gekennzeichnet durch eine Turmapparatur mit mindestens einer Festbettschicht des festen neutralen Katalysators, einen Einlaß im oberen Teil der Turmapparatur zum Einbringen des sauren Fetts, einen Auslaß zur Entnahme des neutralisierten Fetts, einen Einlaß im unteren Teil der Turmapparatur zum Eintrag des Alkohols, so daß dieser im Gegenstrom zum zu behandelnden Fett durch die Festbettschicht strömt, einen Auslaß im oberen Teil der Turmapparatur, an den ein Vakuum zum Abzug eines Wasser und Alkohol enthaltenden Gemisches angelegt ist. Vorzugsweise sind, wie bereits gezeigt, in diesem Reaktionssystem mindestens zwei Feststoffbetten angeordnet. Es ist besonders vorteilhaft, wenn der feste neutrale Katalysator in der Festbettschicht in Form von Spiralen vorliegt, insbesondere im Zusammenhang mit Zink als Katalysatormaterial. Zweckmäßig ist es des weiteren, dass zur Kondensation des Gemisches Alkohol/Wasser eine Einrichtung (8/9) zur differenzierten Kondensation von Alkohol und Wasser vorgesehen ist, wobei der zuerst kondensierte Alkohol über eine Leitung in die Turmapparatur rückführbar ist.

Als Turmapparatur bzw. Reaktionsgefäß kann ein schlanker Behälter mit einem Verhältnis von Durchmesser und Länge von 1:1 bis 1:20 herangezogen werden, der zweckmäßigerweise aus Edelstahl besteht und mit einem Doppelmantel versehen ist.

Darin ist vom Boden bis kurz unterhalb des maximalen Füllstandes der Katalysator in fester Form in mehreren Schichten eingebettet. Im oberen Teil befindet sich die Fetteindüsung sowie die Mess-einrichtung für Druck und Füllstand. Weiterhin befindet sich an der Seite oberhalb des maximalen Füllstandes ein Anschlussstück für den Rückflusskühler. Am Fuß der Turmapparatur befindet sich ein Absaugstutzen sowie etwas oberhalb des Bodens die Vorrichtung zum Eindüsen für den Alkohol. Die erforderliche Reaktionstemperatur wird vorzugsweise durch Erwärmen mit Thermoöl durch den Doppelmantel erreicht. Die Rohrleitung und die Turmapparatur sind thermisch isoliert. Von der oberen Öffnung des Rückflusskühlers besteht eine Verbindung zu dem Produktkühler mit einem Gefälle von etwa 2 % . An der unteren Öffnung des Produktkühlers ist ein Vorlagenbehälter als Kühlfalle angebracht, um ein Ansaugen von Reaktionswasser zu verhindern. Am oberen Teil dieses Vorlagebehälters befindet sich der Anschluss zur Vakuumpumpe.

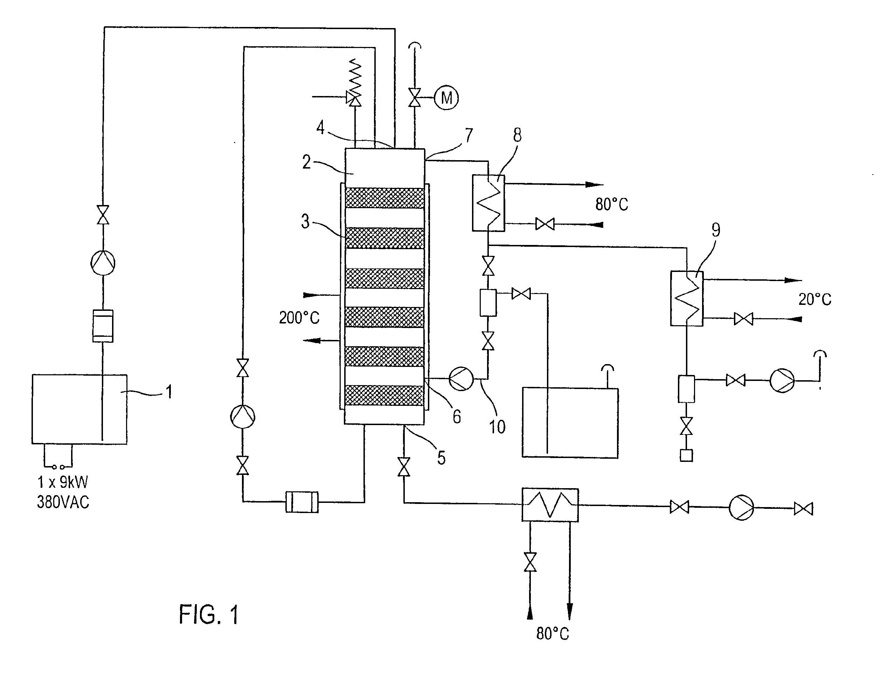

Die Erfindung wird anhand der beigefügten Figur 1 näher erläutert, die eine Anlage zur Durchführung des erfindungsgemäßen Verfahrens darstellt.

Die Erfindung zeichnet sich durch vielfältige Vorteile aus. Es kann insbesondere saures Rohtierfett herangezogen werden, d.h. in der Regel ein Gemisch von Tri-, Di- und Monoglyceriden sowie freien Fettsäuren und Glycerin. Dabei kann der Anteil der freien Fettsäuren sogar mehr als 25 % der Gesamtmasse betragen. Das erhaltene Kraftstoffsubstitut hat neutrale Eigenschaften und besteht vorrangig aus Estern der mehrwertigen Alkohole. Das Kraftstoffsubstitut zeichnet sich dadurch aus, dass keine mineralischen Kraftstoffzusätze erforderlich sind, wie z.B. Methanol, Benzin- oder Dieselkraftstoff. Mit diesem regenerativen Kraftstoffsubstitut können Kraftanlagen, wie insbesondere Blockheizkraftwerke sowie Großdieselmotoren, betrieben werden.

Bisher ist die Verwendung von Tierfett als Kraftstoff nicht Stand der Technik. Die Probleme lagen in dem höheren Schmelzpunkt der Triglyceride sowie der hohen Säurezahl, die sich negativ auf die Nutzungsdauer eingesetzter Kraftanlagen auswirken würde. Dieses Problem hat die Erfindung überwunden. Somit wird erfindungsgemäß ein vorteilhaftes neutralisiertes Tierfett als Kraftstoffsubstitut erhalten, das durch den erhöhten Sauerstoffgehalt gegenüber mineralischen Kraftstoffen hervorragende Verbrennungseigenschaften hat und deutlich geringere Abgastrübungen verursacht sowie gegenüber dem herkömmlichen mineralischen Kraftstoff den weiteren Vorteil besitzt, das es keinen Schwefel enthält. Zudem wird die globale CO₂-Bilanz nicht belastet (erneuerbare Energien). Durch Modifikationen am Verbrennungsmotor kann das neutralisierte Tierfett direkt eingespritzt und verbrannt werden. Bei einer besonders bevorzugten Ausgestaltung der Erfindung wird die Reaktionsmasse (saures Tierfett) mit Hilfe einer Vakuum- und temperaturstabilen Umwälzpumpe im Gegenstrom zum zur Veresterung herangezogenen Alkohol durch die Reaktionsapparatur, insbesondere eine Turmapparatur, von oben nach unten gefördert. Auf diese Weise entsteht ein besonders homogenes Reaktionsgemisch, das sich optimal verarbeiten lässt. Im Stand der Technik werden in Veresterungsreaktoren Rührwerke eingesetzt. Diese sind erfindungsgemäß nicht notwendig, was zu den weiteren Vorteilen führt, dass der hohe technische Aufwand eines Vakuumrührwerkes entfällt und eine kontinuierlichen Prozessführung zulässt.

Ein weiterer Vorteil des erfindungsgemäßen Verfahrens besteht darin, dass es wirtschaftlich ist und eine dezentrale Fettaufbereitung ermöglicht, die auf verschiedene Anlagengrößen abgestimmt werden kann. Die dezentrale Fettaufbereitung führt zu niedrigeren Transportkosten (im Vergleich zu einer zentralen Großaufbereitung) sowie niedrigen Lagerkosten. Die Standortwahl für Kraftanlagen wird somit variabler. Weiterhin kann bei diesem Verfahren auf Konservierungsmittel verzichtet werden, was zu Kosteneinsparungen führt. Das erhaltene Kraftstoffsubstitut kann den in Dauerbetrieb stehenden Kraftanlagen kontinuierlich zugeführt werden. Zwar ist es im Rahmen des erfindungsgemäßen Verfahrens zweckmäßig, insbesondere das pumpfähige Tierfett zunächst über einen Grobfilter zu führen und dann erst in das Reaktionssystem einzubringen, wobei jedoch keine Wäsche erforderlich ist. Bisherige Verfahren erfordern stets eine Vorreinigung des Fettes. Aufgrund des Verzichts einer Vorreinigung (Wäsche) kommt es zwar zu einer Farbvertiefung nach Abschluss der Veresterungsreaktion, was jedoch für den späteren Einsatz als Kraftstoffsubstitut in Kraftanlagen ohne Belang ist.

Die Erfindung soll anhand eines Beispiels noch näher erläutert werden.

### Beispiel

Als Reaktionsgefäß dient eine Turmapparatur. Sie stellt einen Behälter mit einem Verhältnis von Durchmesser zu Länge von 1:10 (innerer Durchmesser: 60 cm, Höhe: 550 cm) dar. Dieser besteht aus Edelstahl und ist mit einem Doppelmantel versehen. In dem Reaktions-turm befinden sich fünf Festbettschichten (Höhe: 60 cm) eines neutralen festen Katalysators in Form von Zinkspiralen. Die Zinkspiralen lagern auf einem gelöcherten Zwischenboden aus Edelstahl. Im oberen Teil befindet sich ein Einlaß zur Fetteindüsung sowie eine Meßeinrichtung für den Druck und den Füllstand. Ferner befindet sich im oberen Teil ein Anschlußstück bzw. -rohr für einen nachfolgenden Kühler, der unter Vakuum steht. Am Fuße der Turmapparatur befindet sich ein Absaugstutzen sowie etwas oberhalb des Bodens ein Einlaß zum Eindüsen für den Alkohol. Die Reaktionstemperatur wird durch Erwärmen mit Thermoöl durch den Doppelmantel erreicht. An der unteren Öffnung des Produktkühlers ist ein Vorlagenbehälter als Kühlfalle angebracht, um ein Ansaugen von Reaktionswasser zu verhindern. Im oberen Teil dieses Vorlagenbehälters befindet sich der Anschluß zur Vakuumpumpe. Insgesamt werden in der oben geschilderten Apparatur bei der Verfahrensdurchführung folgende Verfahrensparameter gewählt:
Einsatzmaterial an saurem Fett in Form von 1000 kg Tierfett
Einsatzmenge an Glycerin als mehrwertigen Alkohol: 27 kg
Reaktionstemperatur: 200°C
Vakuum: 20 mbar
Reaktionsdauer: 5 h

Nach Abschluß der Reaktion werden insgesamt 1000 kg neutralisiertes Fett abgezogen, das unmittelbar zum Beheizen eines Blockheizkraftwerks, gegebenenfalls nach einem Waschen mit einer 0,1 gew.-% igen wäßrigen Zitronensäurelösung, zugeführt werden kann.

## Patentansprüche

1. Verfahren zur Herstellung von Kraftstoffen aus sauren pflanzlichen oder tierischen Fetten, die einen Gehalt an freien Fettsäuren aufweisen, im Rahmen katalytischer Veresterungsreaktionen, **dadurch gekennzeichnet, daß** die in dem sauren Fett enthaltenen freien Fettsäuren bei erhöhter Temperatur und unter Vakuum mit einem oder mehreren mehrwertigen Alkoholen in Gegenwart fester neutraler Katalysatoren, die in einem Festbett innerhalb des Reaktionssystems vorliegen, verestert werden, wobei das saure Fett im Reaktionssystem von oben nach unten und hierzu im Gegenstrom der Alkohol geführt wird und unter der Einwirkung des Vakuums ein Alkohol und Wasser enthaltendes Gemisch im oberen Teil des Reaktionssystems abgezogen wird.

2. Verfahren nach Anspruch 1, **dadurch gekennzeichnet, daß** saure pflanzliche oder tierische Fette in Form von Tierfetten, Altfetten, Abdeckfetten, Fetten aus Ölabscheidern, aus Kläranlagen, aus industriellen Prozessen und/oder stark sauren Pflanzenfetten oder -ölen eingesetzt werden.

3. Verfahren nach Anspruch 2, **dadurch gekennzeichnet, daß** Landtierfette, insbesondere Schweinefett, Rindertalg, Hammeltalg und/oder Pferdefett, oder Seetieröle, insbesondere Fischöl, behandelt werden.

4. Verfahren nach einem der Anspruch 1 bis 3, **dadurch gekennzeichnet, daß** die sauren tierischen oder pflanzlichen Fette bzw. Öle einen Gehalt von etwa 5 bis 75 Gew.-%, insbesondere etwa 15 bis 40 Gew.-%, an freien Fettsäuren aufweisen.

5. Verfahren nach einem der vorhergehenden Ansprüche, **dadurch gekennzeichnet, daß** mit einem zwei- und/oder dreiwertigen Alkohol verestert wird.

6. Verfahren nach Anspruch 5, **dadurch gekennzeichnet, daß** mit Ethylenglykol und/oder Glycerin verestert wird.

7. Verfahren nach mindestens einem der vorhergehenden Ansprüche, **dadurch gekennzeichnet, daß** der Alkohol in einem stöchiometrischen Überschuß zu den in den sauren pflanzlichen und/oder tierischen Fetten bzw. Ölen enthaltenen freien Fettsäuren eingesetzt wird.

8. Verfahren nach mindestens einem der vorhergehenden Ansprüche, **dadurch gekennzeichnet, daß** bei einer Temperatur von etwa 150 bis 220°C, insbesondere von etwa 190 bis 200°C, verestert wird.

9. Verfahren nach mindestens einem der Ansprüche 1 bis 8, **dadurch gekennzeichnet, daß** ein Vakuum von etwa 7 mbar bis 250 mbar, insbesondere etwa 15 bis 50 mbar, eingestellt wird.

10. Verfahren nach mindestens einem der vorhergehenden Ansprüche, **dadurch gekennzeichnet, daß** als feste neutrale Katalysatoren Aluminium, Antimon, Barium, Blei, Cadmium, Eisen, Kupfer, Mangan, Titan, Zinn, Zink, deren Oxide, Salze und/oder Legierungen hiervon herangezogen werden.

11. Verfahren nach mindestens einem der vorhergehenden Ansprüche, **dadurch gekennzeichnet, daß** in dem Reaktionssystem, insbesondere in Form einer Turmapparatur, mindestens zwei beabstandete Festbettschichten des Katalysators angeordnet sind.

12. Verfahren nach mindestens einem der vorhergehenden Ansprüche, **dadurch gekennzeichnet, daß** der Katalysator in Form von Spiralen vorliegt.

13. Verfahren nach mindestens einem der vorhergehenden Ansprüche, **dadurch gekennzeichnet, daß** das Alkohol und Wasser enthaltende Gemisch nach Abzug aus dem Reaktionssystem einer differenzierten Kondensation unterworfen wird, wobei der gesondert kondensierte Alkohol dem Reaktionssystem wieder zugeführt wird.

14. Verfahren nach mindestens einem der vorhergehenden Ansprüche, **dadurch gekennzeichnet, daß** das im Veresterungssystem gebildete neutralisierte pflanzliche und/oder tierische Fett abgezogen und zur Entfernung von eventuellen Katalysator-Resten und anderen Verunreinigungen mit einer wäßrigen organischen Säure, insbesondere einer etwa 0,05 bis 0,5%igen wäßrigen Zitronensäurelösung, gewaschen wird.

15. Verfahren nach mindestens einem der vorhergehenden Ansprüche, **dadurch gekennzeichnet, daß** die sauren pflanzlichen und/oder tierischen Fette bzw. Öle durch Vorwärmen in einen pumpfähigen Zustand überführt und dann in das Reaktionssystem eingeführt werden.

16. Verfahren nach Anspruch 15, **dadurch gekennzeichnet, daß** das pumpfähige saure pflanzliche und/oder tierische Fett vor Eintrag in das Reaktionssystem zum Abtrennen von Schwebeteilchen bzw. Sandkörner und anderer körniger Verunreinigungen durch ein Grobfilter geführt wird.

17. Verfahren nach mindestens einem der vorhergehenden Ansprüche, **dadurch gekennzeichnet, daß** das neutralisierte pflanzliche und/oder tierische Fett einer Kraftanlage, insbesondere einem Blockheizkraftwerk oder einem Großdieselmotor, zugeführt wird.

18. Verfahren nach Anspruch 17, **dadurch gekennzeichnet, daß** die beim Betrieb der Kraftanlage anfallende Wärme zum Beheizen des Reaktionssystems und zum Vorwärmen des Ausgangsmaterials herangezogen wird.

19. Anlage zur Durchführung des Verfahrens nach mindestens einem der vorhergehenden Ansprüche 1 bis 18, **gekennzeichnet durch** eine Turmapparatur (2) mit mindestens einer Festbettschicht (3) des festen neutralen Katalysators, einen Einlaß (4) im oberen Teil der Turmapparatur zum Einbringen des sauren Fetts, einen Auslaß (5) zur Entnahme des neutralisierten Fetts, einen Einlaß (6) im unteren Teil der Turmapparatur zum Eintrag des Alkohols, so daß dieser im Gegenstrom zum zu behandelnden Fett **durch** die Festbettschicht (3) strömt, einen Auslaß (7) im oberen Teil der Turmapparatur, von dem **durch** eine Vakuumeinrichtung (8) ein Wasser und Alkohol enthaltendes Gemisch abgezogen werden kann.

20. Anlage nach Anspruch 19, **dadurch gekennzeichnet, daß** darin mindestens zwei Feststoffbetten angeordnet sind.

21. Anlage nach Anspruch 19 oder 20, **dadurch gekennzeichnet, daß** zur Kondensation des Gemisches Alkohol/Wasser eine Einrichtung (8/9) zur differenzierten Kondensation von Alkohol und Wasser vorgesehen ist, wobei der zuerst kondensierte Alkohol über eine Leitung (10) in die Turmapparatur rückführbar ist.

22. Anlage nach mindestens einem der vorhergehenen Ansprüche, **dadurch gekennzeichnet, daß** der feste neutrale Katalysator in der Festbettschicht in Form von Spiralen vorliegt.

## Claims

1. Method for the production of fuel from acidic vegetable or animal fat, which have a free fatty acid (ffa) content, by means of catalytic esterification reactions, **characterised by** the esterification of free fatty acids contained in the acidic fat at an elevated temperature and in a vacuum with one or more multivalent alcohols accompanied by solid neutral catalysts, which are present in a packed bed inside the reactor, whereby the acidic fat travels from the top to the bottom of the reactor with the alcohol running counter current and a mixture containing alcohol and water being removed from the upper part of the reactor by means of a vacuum effect.

2. Method according to claim 1 is **characterised by** vegetable or animal fats, in form of animal fats, waste fats, rendering fats, fats from oil traps, from sewage plants, from industrial processes and/or strongly acidic vegetable fats or oils being used.

3. Method according to claim 2, is **characterised by** pig lard, bovine and mutton suet and/or horse fat being used as land animal fat and marine animal oil, preferentially fish oil.

4. Method according to claim 1 through 3 is **characterised by** the animal or vegetable fats or oils containing a 5 to 75 percent per weight ffa content, preferentially 15 to 40 percent per weight ffa content.

5. Method according to one of the above claims is **characterised by** its being esterified with a di- and/or trivalent alcohol.

6. Method according to claim 5 is **characterised by** its being esterified with ethylene glycol and/or glycerine.

7. Method according to at least one of the above claims is **characterised by** the alcohol being used in a stoichiometric excess for the ffa which are contained in the acidic vegetable and/or animal fats or oils.

8. Method according to at least one of the above claims is **characterised by** the esterification occurring at a temperature of 150°C to 220°C, preferentially at a temperature of 190°C to 200°C.

9. Method according to at least one of the claims 1 through 8 is **characterised by** a vacuum being set from 7 to 250 mbar, preferentially from 15 to 50 mbar.

10. Method according to at least one of the above claims is **characterised by** aluminum, antimony, barium, lead, cadmium, iron, copper, manganese, titanium, tin, zinc, and their oxides, salts and/or alloys being used as solid neutral catalysts.

11. Method according to at least one of the above claims is **characterised by** a tower shaped reactor with at least two packed beds being arranged within.

12. Method according to at least one of the above claims is **characterised by** the catalyst existing in the form of spirals.

13. Method according to at least one of the above claims is **characterised by** a fractionated condensation of a mixture containing alcohol and water after being drawn from the reactor and wherein the condensed alcohol re-enters the reactor.

14. Method according to at least one of the above claims is **characterised by** the neutralised vegetable and/or animal fat which was/is formed in the esterification process being let out and to remove possible catalyst remnants and other contaminants by washing with an aqueous organic acid, especially with a 0.05 to 0.5 percent aqueous citric acid solution.

15. Method according to at least one of the above claims is **characterised by** the acidic vegetable and/or animal fats or oils being transformed into a pumpable state and inserted then in the reactor.

16. Method according to claim 15 is **characterised by** the pumpable acidic vegetable and/or animal fat being run through a coarse filter before entering the reactor where the removal of suspended particles or grains of sand and other granular contamination occurs.

17. Method according to at least one of the above claims is **characterised by** the neutralised vegetable and/or animal fat being directed into a power plant, preferentially into a combined heat and power unit or a large diesel engine.

18. Method according to claim 17 is **characterised by** the heat, which occurs through the operating of the power plant, being used for heating the reactor and pre-heating the source material.

19. Apparatus for the implementation of the method according to at least one of the above claims 1 through 18 is **characterised by** a tower apparatus (2) with at least one packed bed (3) of solid neutral catalyst, an inlet (4) in the upper part of the tower apparatus to insert the fat, an outlet (5) in the lower part of the tower apparatus for removal of the neutralised fat, an inlet (6) in the lower part of the tower apparatus to insert alcohol, so that it runs counter through the packed bed to the fat which is to be treated, an outlet (7) in the upper part of the tower apparatus from which a mixture containing water and alcohol is drained by means of a vacuum pump (8).

20. Apparatus according to claim 19 is **characterized by** at least two packed beds being arranged within.

21. Apparatus according to claim 19 or 20 is **characterised by** a device (8/9) for the condensation of the alcohol-water mixture, which is intended for the separate condensation of alcohol and water, thereby it is possible to direct the initially condensed alcohol back into the tower apparatus through a conduit (10).

22. Apparatus according to at least one of the above claims **characterised by** a spiral shaped neutral solid catalyst arranged in a packing bed.

## Revendications

1. Procédé pour fabriquer des carburants à partir de graisses végétales ou animales acides, qui présentent une teneur en acides gras libres, dans le cadre de réactions d'estérification catalytiques, **caractérisé en ce que** les acides gras libres contenus dans la graisse acide sont estérifiés à température élevée et sous vide avec un ou plusieurs alcools polyvalents en présence de catalyseurs neutres fixes, qui sont présents dans un lit fixe à l'intérieur du système de réaction, la graisse acide étant guidée dans le système de réaction du haut vers le bas et l'alcool étant guidé à cet effet dans le contre-flux et un mélange contenant de l'alcool et de l'eau étant retiré dans la partie supérieure du système de réaction sous l'effet du vide.

2. Procédé selon la revendication 1, **caractérisé en ce que** des graisses végétales ou animales acides sont utilisées sous forme de graisses animales, de graisses usagées, de graisses de recouvrement, de graisses provenant de séparateurs d'huile, d'installations de décantation, de processus industriels et/ou de graisses ou d'huiles végétales très acides.

3. Procédé selon la revendication 2, **caractérisé en ce que** des graisses d'animaux de campagne, en particulier de la graisse de porc, du suif de boeuf, du suif de mouton et/ou de la graisse de cheval, ou des huiles d'animaux marins, en particulier de l'huile de poisson, sont traitées.

4. Procédé selon l'une quelconque des revendications 1 à 3, **caractérisé en ce que** les graisses ou huiles animales ou végétales acides présentent une teneur d'environ 5 à 75 % en poids, en particulier d'environ 15 à 40 % en poids, d'acides gras libres.

5. Procédé selon l'une des revendications précédentes, **caractérisé en ce qu'**on estérifie avec un alcool bivalent et/ou trivalent.

6. Procédé selon la revendication 5, **caractérisé en ce qu'**on estérifie avec de l'éthylèneglycol et/ou du glycérol.

7. Procédé selon au moins l'une des revendications précédentes, **caractérisé en ce que** l'alcool est utilisé dans un excédent stoechiométrique d'acides gras libres contenus dans les graisses ou huiles acides végétales et/ou animales.

8. Procédé selon au moins l'une des revendications précédentes, **caractérisé en ce qu'**on estérifie à une température d'environ 150 à 220°C, en particulier d'environ 190 à 200°C.

9. Procédé selon au moins l'une des revendications 1 à 8, **caractérisé en ce qu'**un vide d'environ 7 mbar jusqu'à 250 mbar, en particulier d'environ 15 à 50 mbar, est réglé.

10. Procédé selon au moins l'une des revendications précédentes, **caractérisé en ce que**, comme catalyseurs neutres fixes, on utilise de l'aluminium, de l'antimoine, du baryum, du plomb, du cadmium, du fer, du cuivre, du manganèse, du titane, de l'étain, du zinc, leurs oxydes, sels et/ou alliages.

11. Procédé selon au moins l'une des revendications précédentes, **caractérisé en ce qu'**au moins deux couches à lit fixe espacées du catalyseur sont disposées dans le système de réaction, en particulier sous la forme d'un appareillage de tour.

12. Procédé selon au moins l'une des revendications précédentes, **caractérisé en ce que** le catalyseur est présent sous forme de spirales.

13. Procédé selon au moins l'une des revendications précédentes, **caractérisé en ce que** le mélange contenant de l'alcool et de l'eau est soumis à une condensation différenciée après enlèvement du système de réaction, l'alcool condensé séparément étant amené à nouveau au système de réaction.

14. Procédé selon au moins l'une des revendications précédentes, **caractérisé en ce que** la graisse végétale et/ou animale, neutralisée et formée dans le système d'estérification est retirée et lavée pour l'enlèvement d'éventuels restes de catalyseur et d'autres impuretés avec un acide organique aqueux, en particulier une solution aqueuse d'acide citrique diluée à 0,05 jusqu'à 0,5 %.

15. Procédé selon au moins l'une des revendications précédentes, **caractérisé en ce que** les graisses ou huiles acides végétales et/ou animales, sont transférées par préchauffage dans un état apte au pompage et introduites ensuite dans le système de réaction.

16. Procédé selon la revendication 15, **caractérisé en ce que** la graisse végétale et/ou animale acide et apte au pompage est guidée par un filtre grossier avant introduction dans le système de réaction pour la séparation de particules en suspension ou de grains de sable et d'autres impuretés granuleuses.

17. Procédé selon au moins l'une des revendications précédentes, **caractérisé en ce que** la graisse neutralisée végétale et/ou animale est amenée à une centrale thermique, en particulier une centrale thermique en montage-bloc ou un moteur diesel de forte puissance.

18. Procédé selon la revendication 17, **caractérisé en ce que** la chaleur occasionnée lors du fonctionnement de la centrale thermique est utilisée pour le chauffage du système de réaction et pour le préchauffage du matériau de départ.

19. Installation pour la mise en oeuvre du procédé selon au moins l'une des revendications 1 à 18 précédentes, **caractérisée par** un appareillage de tour (2) comprenant au moins une couche à lit fixe (3) du catalyseur neutre fixe, une entrée (4) dans la partie supérieure de l'appareillage de tour pour l'introduction de la graisse acide, une sortie (5) pour le prélèvement de la graisse neutralisée, une entrée (6) dans la partie inférieure de l'appareillage de tour pour l'introduction de l'alcool, de sorte que celui-ci s'écoule dans le contre-flux par rapport à la graisse à traiter par la couche à lit fixe (3), une sortie (7) dans la partie supérieure de l'appareillage de tour, de laquelle un mélange contenant de l'eau et de l'alcool peut être retiré par un système de vide (8).

20. Installation selon la revendication 19, **caractérisée en ce qu'**au moins deux lits de matière solide sont disposés à l'intérieur.

21. Installation selon la revendication 19 ou 20, **caractérisée en ce que**, pour la condensation du mélange alcool/eau, il est prévu un dispositif (8/9) pour la condensation différenciée d'alcool et d'eau, l'alcool condensé d'abord pouvant être recyclé par une conduite (10) dans l'appareillage de tour.

22. Installation selon au moins l'une des revendications précédentes, **caractérisée en ce que** le catalyseur neutre fixe est présent dans la couche à lit fixe sous la forme de spirales.
